# EUROPEAN PATENT APPLICATION

(11) **EP 3 790 008 A1**
(43) Date of publication of application: **10.03.2021**
(21) Application number: 20725764.3
(22) Date of filing: 12.02.2020
(51) Int. Cl.: G11B 27/031, G11B 27/34

(54) **METHOD AND APPARATUS FOR GENERATING INTERACTIVE AUDIO/VIDEO BASED ON MOBILE TERMINAL**

(30) Priority: 25.07.2019 CN 201910676131
(71) Applicant: Wangsu Science & Technology Co., Ltd., Shanghai 200030 (CN)
(72) Inventor: CHEN, Yanpeng, Shanghai 200030 (CN)
(74) Representative: Würmser, Julian
(86) International application number: PCT/CN2020/074963
(87) International publication number: WO 2021/012664

(57) **Abstract**

The present disclosure discloses a method and apparatus for generating an interactive audio-video based on a mobile terminal. The method includes that a mobile device obtains a name of an interactive audio-video to be generated and an audio-video clip corresponding to the name of the interactive audio-video to be generated, and creates an interactive audio-video directory according to the name of the interactive audio-video to be generated (201); the mobile device determines a video list and a tree field in the interactive audio-video directory according to the audio-video clip (202); the mobile device draws a tree relationship in the interactive audio-video directory according to the tree field, and edits the tree relationship according to the video list (203); and the mobile device generates the interactive audio-video according to the video list and the tree relationship in the interactive audio-video directory (204).

## Description

### CROSS REFERENCE TO RELATED APPLICATIONS

The present disclosure refers to Chinese patent application No. 201910676131.4, titled "METHOD AND APPRATUS FOR GENERATIING INTERACTIVE AUDIO-VIDEO BASED ON MOBILE TERMINAL", filed July 25, 2019, which is incorporated by reference herein in its entirety.

### TECHNICAL FIELD

The present disclosure relates to video playing technologies and in particular to a method and apparatus for generating an interactive audio-video based on a mobile terminal.

### BACKGROUND

With the rapid development of mobile Internet and the continuous improvement of performance of a terminal device, the use of the mobile device to watch a live broadcast and a video on demand online anytime and anywhere is becoming more and more popular. The live broadcast may achieve a good interaction between anchors and audiences due to its real-time capability, while the video on demand may not achieve the interaction due to its lack of the real-time capability.

In a traditional playing mode of a streaming media on-demand, the audiences are still single receivers, and the introduction of an interactive video may enable traditional on-demand audiences to participate in the interaction related to video content when watching the video content, thereby enhancing interactive interest and achieving more valuable video on demand.

In the mobile Internet era, video content production tends to be prevalent, and videos with rich contents may be produced by the mobile device. However, a final video generated by the current video production and editing on the mobile terminal is only a single video without interactive features.

### SUMMARY

The embodiments of the present disclosure provide a method and apparatus for generating an interactive audio-video based on a mobile terminal to achieve the production and generation of the interactive audio-video on a mobile device.

In a first aspect, an embodiment of the present disclosure provides a method for generating an interactive audio-video based on a mobile terminal, and the method includes:
obtaining, by a mobile device, a name of an interactive audio-video to be generated and an audio-video clip corresponding to the name of the interactive audio-video to be generated, and creating, by the mobile device, an interactive audio-video directory according to the name of the interactive audio-video to be generated;
determining, by the mobile device, a video list and a tree field in the interactive audio-video directory according to the audio-video clip;
drawing, by the mobile device, a tree relationship in the interactive audio-video directory according to the tree field and editing, by the mobile device, the tree relationship according to the video list; and
generating, by the mobile device, an interactive audio-video according to the video list and the tree relationship in the interactive audio-video directory.

In the above technical solution, the mobile device may draw the tree relationship in the interactive audio-video directory and edit the tree relationship, so as to achieve an interactive association relationship, thereby realizing the production and generation of the interactive audio-video on the mobile device and solving the problem that existing mobile devices are not able to realize the video content with interactive nature.

In one embodiment, determining, by the mobile device, the video list and the tree field in the interactive audio-video directory according to the audio-video clip includes:
putting, by the mobile device, the audio-video clip into the video list, generating, by the mobile device, the tree field, and filling in, by the mobile device, a root node, if the audio-video clip is a first audio-video clip; or
putting, by the mobile device, the audio-video clip into the video list and filling in, by the mobile device, a leaf node of the tree field if the audio-video clip is not the first audio-video clip.

In the above technical solution, a corresponding relationship between the audio-video clip and each of the nodes may be realized by filling the nodes in the tree field.

In one embodiment, the tree relationship includes an interactive tree relationship and a main-thread tree relationship;
drawing, by the mobile device, the tree relationship in the interactive audio-video directory according to the tree field and editing, by the mobile device, the tree relationship according to the video list includes:
traversing, by the mobile device, a root node and the leaf node in the tree field, drawing, by the mobile device, the interactive tree relationship in the interactive audio-video directory according to interaction rule information of the interactive audio-video issued by a user, and determining, by the mobile device, the main-thread tree relationship from the interactive tree relationship; and
editing, by the mobile device, the audio-video clip corresponding to each of nodes in the interactive tree relationship and an association relationship between each of the nodes according to the interaction rule information and the audio-video clip in the video list, and editing, by the mobile device, a corresponding relationship between each of the nodes and the audio-video clip in the main-thread tree relationship;
where the association relationship includes an interactive description and a plurality of options.

In the above technical solution, the interactive tree relationship and the main-thread tree relationship are drawn through the interaction rule information and traversing the tree field, and the tree relationship is edited, thereby achieving the purpose of editing the interactive audio-video on mobile device.

In one embodiment, after the mobile device edits the tree relationship according to the video list, the method further includes:
obtaining, by the mobile device, node modification information issued by the user;
creating, by the mobile device, a new child node and modifying, by the mobile device, the association relationship of the new child node, if the node modification information is an newly added node;
deleting, by the mobile device, a deletion node according to an identification of the deletion node if the node modification information is the deletion node; and
modifying, by the mobile device, the association relationship of a modification node according to the identification of the modification node if the node modification information is the modification node.

In the above technical solution, a management of each of the nodes in the tree relationship may be realized by obtaining the node modification information issued by the user.

In one embodiment, after the mobile device edits the tree relationship according to the video list, the method further includes:
obtaining, by the mobile device, an audio-video clip to be deleted issued by the user; and
determining, by the mobile device, whether the audio-video clip to be deleted is associated with the nodes of the tree relationship, and if not, deleting, by the mobile device, the audio-video clip to be deleted, otherwise not deleting.

In the above technical solution, the management of the audio-video clip may be realized through the judgment of the audio-video clip to be deleted.

In one embodiment, generating, by the mobile device, the interactive audio-video according to the video list and the tree relationship in the interactive audio-video directory includes:
uploading, by the mobile device, the audio-video clip in the video list and determining, by the mobile device, a URL of each of audio-video clips;
updating, by the mobile device, the video list in the interactive audio-video directory according to the URL of each of the audio-video clips; and
uploading, by the mobile device, the interactive audio-video directory that is updated and determining the URL of the interactive audio-video directory.

In the above technical solution, the URL corresponding to each of the audio-video clips is obtained by uploading the audio-video clips in the video list, thereby realizing the issuing of the audio-video clips.

In a second aspect, an embodiment of the present disclosure provides an apparatus for generating an interactive audio-video based on a mobile terminal, and the apparatus includes:
an obtaining unit, configured to obtain a name of an interactive audio-video to be generated and an audio-video clip corresponding to the name of the interactive audio-video to be generated, and create an interactive audio-video directory according to the name of the interactive audio-video to be generated;
a processing unit, configured to determine a video list and a tree field in the interactive audio-video directory according to the audio-video clip, draw a tree relationship in the interactive audio-video directory according to the tree field and edit the tree relationship according to the video list, and generate an interactive audio-video according to the video list and the tree relationship in the interactive audio-video directory.

In one embodiment, the processing unit is configured to:
put the audio-video clip into the video list, generate the tree field and fill a root node if the audio-video clip is the first audio-video clip; and
put the audio-video clip into the video list and fill in a leaf node of the tree field if the audio-video clip is not the first audio-video clip.

In one embodiment, the tree relationship includes an interactive tree relationship and a main-thread tree relationship;
the processing unit is configured to:
traverse a root node and a leaf node in the tree field, draw the interactive tree relationship in the interactive audio-video directory according to interaction rule information of the interactive audio-video issued by a user, and determine the main-thread tree relationship from the interactive tree relationship; and
edit the audio-video clip corresponding to each of nodes and an association relationship between each of the nodes in the interactive tree relationship according to the interaction rule information and the audio-video clip in the video list, and edit a corresponding relationship between each of the nodes and the audio-video clip in the main-thread tree relationship;
where the association relationship includes an interactive description and a plurality of options.

In one embodiment, the processing unit is further configured to:
obtain node modification information issued by the user after editing the tree relationship according to the video list;
create a new child node and modify the association relationship of the new child node if the node modification information is a newly added node;
delete a deletion node according to an identification of the deletion node if the node modification information is the deletion node; and
modify the association relationship of a modification node according to the identification of the modification node if the node modification information is the modification node.

In one embodiment, the processing unit is further configured to:
obtain an audio-video clip to be deleted issued by the user after editing the tree relationship according to the video list; and
determine whether the audio-video clip to be deleted is associated with the node of the tree relationship, and if not, delete the audio-video clip to be deleted, otherwise do not delete.

In one embodiment, the processing unit is configured to:
upload the audio-video clip in the video list and determine a URL of each of audio-video clips;
update the video list in the interactive audio-video directory according to the URL of each of the audio-video clips; and
upload the interactive audio-video directory that is updated and determine the URL of the interactive audio-video directory.

In a third aspect, an embodiment of the present disclosure further provides a computing device, and the computing device includes:
a memory, configured to store a program instruction; and
a processor, configured to call the program instruction stored in the memory and perform the above method for generating the interactive audio-video based on the mobile terminal according to the program that is obtained.

In a fourth aspect, an embodiment of the present disclosure further provides a computer readable non-volatile storage medium, including a computer readable instruction, and the computer readable instruction, when read and executed by a computer, causes the computer to perform the method for generating the interactive audio-video based on the mobile terminal described above.

### BRIEF DESCRIPTION OF THE DRAWINGS

In order to illustrate the technical solutions of the embodiments of the present disclosure more clearly, the accompanying drawings used in the description of the embodiments are briefly described below. It is apparent that the drawings described below are only some embodiments of the present disclosure. For those of ordinary skills in the art, other drawings may also be obtained according to these drawings without any creative work.
FIG. 1 is a schematic diagram of a system architecture provided in an embodiment of the present disclosure;
FIG. 2 is a flowchart of a method for generating an interactive audio-video based on a mobile terminal provided in an embodiment of the present disclosure;
FIG. 3 is a schematic structural diagram of an apparatus for generating an interactive audio-video based on a mobile terminal provided in an embodiment of the present disclosure.

### DETAILED DESCRIPTION

In order to make objectives, technical solutions and advantages of the present disclosure more clear, the embodiments of the present disclosure are explained below in detail in combination to the accompanying drawings. It is apparent that the embodiments described below are only some of rather than all of the embodiments of the present disclosure. Based on the embodiments in the present disclosure, all other embodiments obtained by those of ordinary skills in the art without any creative work shall fall within the protection scope of the present disclosure.

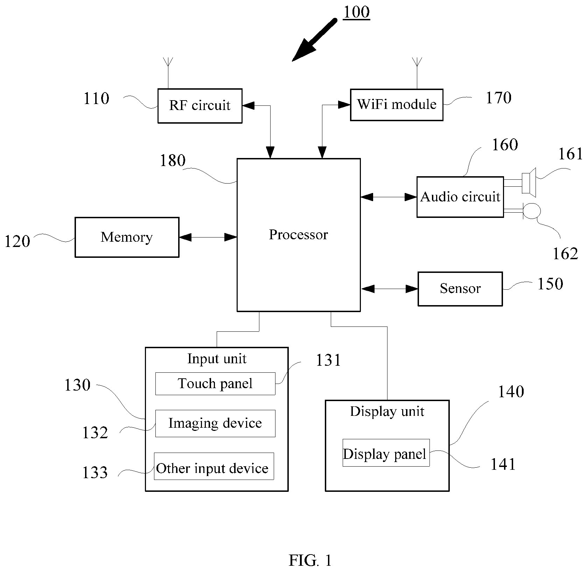

FIG. 1 is a system architecture applicable to an embodiment of the present disclosure. Referring to FIG. 1, the system architecture may be a mobile device 100, which includes components such as a radio frequency (RF) circuit 110, a memory 120, an input unit 130, a display unit 140, a sensor 150, an audio circuit 160, a wireless fidelity (WiFi) module 170, a processor 180 and the like. The mobile device 100 may be configured to generate an interactive audio-video.

Herein, those skilled in the art may understand that the structure of the mobile device 100 shown in FIG. 1 is only an example rather than a limitation, and the mobile device 100 may also include more or fewer components than illustrated, or a combination of some components, or different component arrangements.

The RF circuit 110 may be configured to receive and send a signal in the process of receiving and sending a data or a conversation, and particularly, send a received audio-video stream to the processor 180 for processing.

Herein, the memory 120 may be configured to store a software program and a module, and the processor 180 executes various functional applications and data processing of the mobile device 100 by running the software program and the module stored in the memory 120. The memory 120 may mainly include a storage program area and a storage data area. The storage program area may store an operating system, an application required for at least one function (e.g., a sound playing function, an image playing function, etc.) and the like. The storage data area may store the data (e.g., audio data, a phonebook, etc.) created according to the use of the mobile device 100, and the like. In addition, the memory 120 may include a high-speed random access memory and may further include a non-volatile memory, such as at least one magnetic disk storage device, flash memory device, or other volatile solid-state storage device.

The input unit 130 may be configured to receive an input digital or character information and generate a key signal related to a user setting and function control of the mobile device 100. Specifically, the input unit 130 may include a touch panel 131, an imaging device 132, and other input device 133.

Herein, the display unit 140 may be configured to display information input by a user or provided to the user and various menus of the mobile device 100. The display unit 140 may include a display panel 141. Optionally, the display panel 141 may be configured in the form of a liquid crystal display (LCD), an organic light-emitting diode (OLED), or the like. In this embodiment, the touch panel 131 may cover the display panel 141. The touch panel 131 transmits a touch operation to the processor 180 so as to determine the type of the touch event when detecting the touch operation on or near it. Then the processor 180 provides a corresponding visual output on the display panel 141 according to the type of the touch event.

Moreover, the mobile device 100 may further include at least one type of sensor 150, such as an attitude sensor, a distance sensor, and other sensors.

The audio circuit 160, a speaker 161, and a microphone 162 may provide an audio interface between the user and the mobile device 100. The audio circuit 160 may transmit a received electrical signal converted from the audio data to the processor 180 for language identification.

WiFi is a short-range wireless transmission technology. The mobile device 100 may help the user send and receive an e-mail, browse a web page and access a streaming media (such as a video broadcast) through the WiFi module 170. And the WiFi module 170 provides the user with a wireless broadband Internet access.

The processor 180 is a control center of the mobile device 100, which uses various interfaces and lines to connect various parts of the entire mobile device 100, and performs various functions of the mobile device 100 and processes the data by running or executing the software program and/or the module stored in the memory 120 and calling the data stored in the memory 120, thereby performing overall monitoring of the mobile device 100.

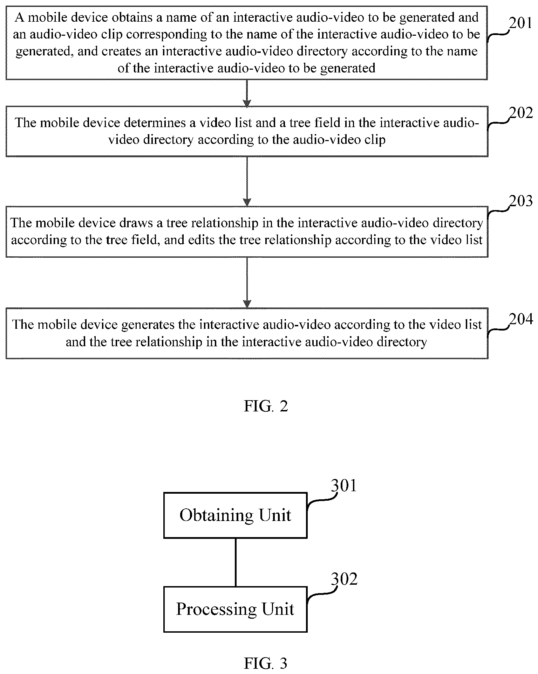

Based on the above description, FIG. 2 exemplarily shows a flow of a method for generating an interactive audio-video based on a mobile terminal provided in an embodiment of the present disclosure. The flow may be executed by an apparatus for generating the interactive audio-video based on the mobile terminal, and the apparatus may be located in the mobile device 100 as shown in FIG. 1 or may be the mobile device 100.

As shown in FIG. 2, the flow includes the following steps. In step 201, a mobile device obtains a name of an interactive audio-video to be generated and an audio-video clip corresponding to the name of the interactive audio-video to be generated, and creates an interactive audio-video directory according to the name of the interactive audio-video to be generated.

An interactive audio-video file may be imported on the mobile device when an audio-video producer needs to generate an interactive audio-video. At this time, the interactive audio-video file may include the name of the interactive audio-video to be generated and the audio-video clip corresponding to the name of the interactive audio-video to be generated. The name of the interactive audio-video to be generated is configured to enable the mobile device to create the interactive audio-video directory, for example, a JSON directory.

The audio-video clip may be an audio-video clip shot by an audio-video creator through the mobile device or imported through the mobile device. For example, a shooting parameter may be first configured during shooting, and a default parameter of the mobile device may be used if the audio-video creator does not specify the parameter. When a shooting starts, a camera and a microphone of the mobile device are called according to a parameter configuration to collect and encode the audio-video, then a shot audio-video clip is moved to the interactive video directory for management and the JSON is updated.

In step 202, the mobile device determines a video list and a tree field in the interactive audio-video directory according to the audio-video clip.

Specifically, if the audio-video clip is a first audio-video clip, the mobile device puts the audio-video clip into the video list, generates the tree field and fills in a root node. If the audio-video clip is not the first audio-video clip, the mobile device puts the audio-video clip into the video list and fills in a leaf node of the tree field.

For example, if the audio-video clip that is obtained is the first audio-video clip, a videos array list in the JSON is updated, the tree field is generated and the first root node is filled.

In step 203, the mobile device draws a tree relationship in the interactive audio-video directory according to the tree field, and edits the tree relationship according to the video list.

In the embodiment of the present disclosure, the tree relationship may include an interactive tree relationship and a main-thread tree relationship. After the video list, the tree field and a main-thread array in the interactive audio-video directory are obtained, the tree relationship in the interactive audio-video directory may be drawn according to the tree field, and the tree relationship in the video list may be edited. Specifically, the mobile device may first traverse the root node and the leaf node in the tree field and draw the main-thread tree relationship in the interactive audio-video directory according to interaction rule information of the interactive audio-video issued by the user. And then the mobile device may edit the audio-video clip corresponding to each of nodes and an association relationship between each of the nodes in the interactive tree relationship according to the interaction rule information and the audio-video clip in the video list. Herein, the association relationship includes an interactive description and a plurality of options. The above interaction rules may be the tree relationship edited by the user, as well as the association relationship between each of the nodes and interactive description information of each of the nodes edited by the user. In other words, the user moves or edits a certain node on a graphic interface, and the mobile device correspondingly edits that node. In addition, the main-thread tree relationship may also be determined from the above main-thread tree relationship. Since the main-thread tree relationship is a fixed tree relationship, the association relationship between each of the nodes in the main-thread tree relationship is fixed and only a corresponding relationship between each of the nodes and the audio-video clip in the main-thread tree relationship needs to be edited when the nodes are edited.

The interactive tree relationship is a different branch line for realizing user-defined playing of the audio-video through an interactive way when the user plays the audio-video. The main-thread tree relationship is a fixed main-thread scenario for playing the audio-video and has no interaction with the user.

In addition, each of the nodes of the tree relationship described above may be modified. Specifically, the mobile device obtains node modification information issued by the user. If the node modification information is a newly added node, a new child node is created and the association relationship of the new child node is modified. If the node modification information is a deletion node, the deletion node is deleted according to an identification of the deletion node. If the node modification information is a modification node, the association relationship of the modification node is modified according to the identification of the modification node.

That is to say, the edition of the above interactive tree relationship is the interaction rule of the interactive audio-video. The mobile device traverses the root node to the leaf node from top to bottom, and any child node may be selected as a current node during editing, and the child nodes of the current node are selected as options of the interactive audio-video, and so on until traversal of the tree is completed.

For example, the tree field in the JSON is read first, and all nodes are recursively traversed. During the recursively traversing, the number of the child nodes is marked, a width is calculated, and the tree is drawn when traversing downward. Then, the node selected by the audio-video producer in an interactive tree diagram is obtained, an association list of the node is entered, and the child nodes of the node are displayed. The current node enters an association relationship editing mode when continuing to be selected. Herein, when the association relationship is edited, the association relationship of the node contains one question and n options, and the node may associate a new child node or may modify the question and the options of the current node that is associated. A next option association item is dynamically generated when a current option is specified and the audio-video clip is successfully associated. The node is not required to be unique, which may be repeated. When the current option is specified and successfully saved, a globally unique identifier (GUID) is generated for each of newly generated nodes and the JSON is updated. And when the node needs to be deleted, a parent node of the current node is traversed to through the GUID, and the child node at a corresponding position of the parent node is deleted.

At the same time, the mobile device may also obtain an audio-video clip to be deleted issued by the user, and determine whether the audio-video clip to be deleted is associated with the node of the tree relationship at this time. If not, the audio-video clip to be deleted is deleted, otherwise it is not deleted. That is, whether a current tree structure has been associated with a current audio-video clip is checked before the audio-video clip is deleted. The current audio-video clip is not allowed to be deleted if the current tree structure has been associated with the current audio-video clip, and the current audio-video clip is able to be deleted if the current tree structure has not been associated with the current audio-video clip. Correspondingly, the name of each of the audio-video clips may also be modified, and at this time, the name in the field containing the current clip in the JSON needs to be updated.

In step 204, the mobile device generates the interactive audio-video according to the video list and the tree relationship in the interactive audio-video directory.

After the video list and the tree relationship are obtained, the interactive audio-video directory needs to be uploaded to obtain a URL of the interactive audio-video directory, which is equivalent to generating the interactive audio-video. Specifically, the mobile device first uploads the audio-video clips in the video list, determines the URL of each of the audio-video clips, then updates the video list in the interactive audio-video directory according to the URL of each of the audio-video clips, and finally uploads the updated interactive audio-video directory and determines the URL of the interactive audio-video directory. During specific implementation, a JSON form and the audio-video clips may be exported to the same directory. Then the audio-video clips are uploaded in turn to obtain the URL returned by a server so as to update a URL field of the videos in the JSON. Finally, the updated JSON is uploaded, and the URL obtained after the JSON is uploaded may be shared.

It should be noted that the audio-video clip corresponding to each of the nodes in the above main-thread tree relationship is the audio-video clip of a main-thread process, and the main-thread process is a video in which the specified audio-video clips are connected in series to form a traditional single process. The first node may be used as the main-thread process by default when a hierarchical relationship between the nodes is generated, or a selected branch may be specified as the main-thread process after hierarchical relationship between the nodes is generated. The main-thread tree relationship may be determined according to the interactive tree relationship, that is, the nodes required for the main-thread tree relationship are determined from the interactive tree relationship.

The above embodiment indicates that the mobile device obtains the name of the interactive audio-video to be generated and the audio-video clip corresponding to the name of the interactive audio-video to be generated, and creates the interactive audio-video directory according to the name of the interactive audio-video to be generated; the mobile device determines the video list and the tree field in the interactive audio-video directory according to the audio-video clip; the mobile device draws the tree relationship in the interactive audio-video directory according to the tree field, and edits the tree relationship according to the video list; and the mobile device generates the interactive audio-video according to the video list and the tree relationship in the interactive audio-video directory. The mobile device may draw the tree relationship in the interactive audio-video directory and edit the tree relationship, so as to achieve an interactive association relationship, thereby realizing the production and generation of the interactive audio-video on the mobile device and solving the problem that the existing mobile devices are not able to realize the video content with interactive nature.

Based on the same technical concept, FIG. 3 exemplarily shows a structure of an apparatus for generating an interactive audio-video based on a mobile terminal provided in an embodiment of the present disclosure. The apparatus may execute a flow of generating the interactive audio-video based on the mobile terminal. The apparatus may be located in the mobile device 100 as shown in FIG. 1, or may be the mobile device 100.

As shown in FIG. 3, the apparatus includes:
an obtaining unit 301, configured to obtain a name of an interactive audio-video to be generated and an audio-video clip corresponding to the name of the interactive audio-video to be generated, and create an interactive audio-video directory according to the name of the interactive audio-video to be generated;
a processing unit 302, configured to determine a video list and a tree field in the interactive audio-video directory according to the audio-video clip, draw a tree relationship in the interactive audio-video directory according to the tree field and edit the tree relationship according to the video list, and generate an interactive audio-video according to the video list and the tree relationship in the interactive audio-video directory.

In one embodiment, the processing unit 302 is configured to:
put the audio-video clip into the video list, generate the tree field, and fill in a root node, if the audio-video clip is a first audio-video clip; and
put the audio-video clip into the video list and fill in a leaf node of the tree field if the audio-video clip is not the first audio-video clip.

In one embodiment, the tree relationship includes an interactive tree relationship and a main-thread tree relationship;
the processing unit 302 is configured to:
traverse a root node and a leaf node in the tree field, draw the interactive tree relationship in the interactive audio-video directory according to interaction rule information of the interactive audio-video issued by a user, and determine the main-thread tree relationship from the interactive tree relationship; and
edit the audio-video clip corresponding to each of nodes and an association relationship between each of the nodes in the interactive tree relationship according to the interaction rule information and the audio-video clip in the video list, and edit a corresponding relationship between the each of the nodes and the audio-video clip in the main-thread tree relationship;
where the association relationship includes an interactive description and a plurality of options.

In one embodiment, the processing unit 302 is further configured to:
obtain node modification information issued by the user after editing the tree relationship according to the video list;
create a new child node and modify the association relationship of the new child node if the node modification information is a newly added node;
delete a deletion node according to an identification of the deletion node if the node modification information is the deletion node; and
modify the association relationship of a modification node according to the identification of the modification node if the node modification information is the modification node.

In one embodiment, the processing unit 302 is further configured to:
obtain an audio-video clip to be deleted issued by the user after editing the tree relationship according to the video list; and
determine whether the audio-video clip to be deleted is associated with the nodes of the tree relationship, and if not, delete the audio-video clip to be deleted, otherwise do not delete.

In one embodiment, the processing unit 302 is configured to:
upload the audio-video clip in the video list and determine a URL of each of audio-video clips;
update the video list in the interactive audio-video directory according to the URL of each of the audio-video clips; and
upload the interactive audio-video directory that is updated and determine the URL of the interactive audio-video directory.

Based on the same technical concept, an embodiment of the present disclosure further provides a computing device, and the computing device includes:
a memory, configured to store a program instruction; and
a processor, configured to call the program instruction stored in the memory and perform the above method for generating the interactive audio-video based on the mobile terminal according to the program that is obtained.

Based on the same technical concept, an embodiment of the present disclosure further provides a computer readable non-volatile storage medium, including a computer readable instruction, and the computer readable instruction, when read and executed by a computer, causes the computer to perform the above method for generating the interactive audio-video based on the mobile terminal.

The present disclosure is described with reference to flowcharts and/or block diagrams of a method, an apparatus (system), and a computer program product according to embodiments of the present disclosure. It should be appreciated that each process and/or each block in the flowcharts and/or block diagrams, and a combination of the processes and/or the blocks in the flowcharts and/or block diagrams may be implemented by the computer program instruction. These computer program instructions may be provided to a general-purpose computer, a specialized computer, an embedded processor, or the processor of other programmable data processing device so as to give rise to a machine, which causes the instructions executed by the computer or processor of other programmable data processing device to give rise to an apparatus that is used to implement the functions specified in one or more processes of the flowcharts and/or one or more blocks of the block diagrams.

These computer program instructions may also be stored in a computer readable memory capable of directing the computer or the other programmable data processing device to work in a specific manner, which causes the instructions stored in the computer readable memory to give rise to a manufactured product including an instruction apparatus, and the instruction apparatus implements the functions specified in one or more processes of the flowcharts and/or one or more blocks of the block diagrams.

These computer program instructions may also be loaded on the computer or the other programmable data processing devices, so that a series of operational steps may be performed on the computer or the other programmable devices so as to give rise to a computer implemented processing, such that the instructions executed on the computer or the other programmable devices provide steps for implementing the functions specified in one or more processes of the flowcharts and/or one or more blocks of the block diagrams.

Although some embodiments of the present disclosure have been described, those skilled in the art may make additional changes and modifications to these embodiments once they know the basic inventive concepts. Therefore, the appended claims are intended to be interpreted as including the some embodiments described above and all changes and modifications that fall within the scope of the present disclosure.

It is apparent that various modifications and variations may be made to the present disclosure by those skilled in the art without departing from the spirit and scope of the present disclosure. Inn this way, the present disclosure also intends to include these modifications and variations if these modifications and variations of the present disclosure fall within the scope of the claims of the present disclosure and their equivalent technologies.

## Claims

1. A method for generating an interactive audio-video based on a mobile terminal, comprising:
obtaining, by a mobile device, a name of an interactive audio-video to be generated and an audio-video clip corresponding to the name of the interactive audio-video to be generated, and creating, by the mobile device, an interactive audio-video directory according to the name of the interactive audio-video to be generated;
determining, by the mobile device, a video list and a tree field in the interactive audio-video directory according to the audio-video clip;
drawing, by the mobile device, a tree relationship in the interactive audio-video directory according to the tree field and editing, by the mobile device, the tree relationship according to the video list; and
generating, by the mobile device, the interactive audio-video according to the video list and the tree relationship in the interactive audio-video directory.

2. The method according to claim 1, wherein determining, by the mobile device, the video list and the tree field in the interactive audio-video directory according to the audio-video clip comprises:
putting, by the mobile device, the audio-video clip into the video list, generating, by the mobile device, the tree field, and filling in, by the mobile device, a root node, if the audio-video clip is a first audio-video clip; or
putting, by the mobile device, the audio-video clip into the video list and filling in, by the mobile device, a leaf node of the tree field if the audio-video clip is not the first audio-video clip.

3. The method according to claim 1, wherein the tree relationship comprises an interactive tree relationship and a main-thread tree relationship;
wherein drawing, by the mobile device, the tree relationship in the interactive audio-video directory according to the tree field and editing, by the mobile device, the tree relationship according to the video list comprises:
traversing, by the mobile device, a root node and a leaf node in the tree field, drawing, by the mobile device, the interactive tree relationship in the interactive audio-video directory according to interaction rule information of the interactive audio-video issued by a user, and determining, by the mobile device, the main-thread tree relationship from the interactive tree relationship; and
editing, by the mobile device, the audio-video clip corresponding to each of nodes and an association relationship between each of the nodes in the interactive tree relationship according to the interaction rule information and the audio-video clip in the video list, and editing, by the mobile device, a corresponding relationship between each of the nodes and the audio-video clip in the main-thread tree relationship;
wherein the association relationship comprises an interactive description and a plurality of options.

4. The method according to claim 3, wherein after the mobile device edits the tree relationship according to the video list, the method further comprises:
obtaining, by the mobile device, node modification information issued by the user;
creating, by the mobile device, a new child node and modifying, by the mobile device, the association relationship of the new child node if the node modification information is an newly added node;
deleting, by the mobile device, a deletion node according to an identification of the deletion node if the node modification information is the deletion node; and
modifying, by the mobile device, the association relationship of a modification node according to the identification of the modification node if the node modification information is the modification node.

5. The method according to claim 3, wherein after the mobile device edits the tree relationship according to the video list, the method further comprises:
obtaining, by the mobile device, an audio-video clip to be deleted issued by the user; and
determining, by the mobile device, whether the audio-video clip to be deleted is associated with the nodes of the tree relationship, and if not, deleting, by the mobile device, the audio-video clip to be deleted, otherwise not deleting.

6. The method according to any one of claims 1 to 5, wherein generating, by the mobile device, the interactive audio-video according to the video list and the tree relationship in the interactive audio-video directory comprises:
uploading, by the mobile device, the audio-video clip in the video list and determining, by the mobile device, a URL of each of audio-video clips;
updating, by the mobile device, the video list in the interactive audio-video directory according to the URL of each of the audio-video clips; and
uploading, by the mobile device, the interactive audio-video directory that is updated and determining, by the mobile device, the URL of the interactive audio-video directory.

7. An apparatus for generating an interactive audio-video based on a mobile terminal, comprising:
an obtaining unit, configured to obtain a name of an interactive audio-video to be generated and an audio-video clip corresponding to the name of the interactive audio-video to be generated, and create an interactive audio-video directory according to the name of the interactive audio-video to be generated;
a processing unit, configured to determine a video list and a tree field in the interactive audio-video directory according to the audio-video clip, draw a tree relationship in the interactive audio-video directory according to the tree field and edit the tree relationship according to the video list, and generate an interactive audio-video according to the video list and the tree relationship in the interactive audio-video directory.

8. The apparatus according to claim 7, wherein the processing unit is configured to:
put the audio-video clip into the video list, generate the tree field, and fill in a root node, if the audio-video clip is a first audio-video clip; and
put the audio-video clip into the video list and fill in a leaf node of the tree field if the audio-video clip is not the first audio-video clip.

9. The apparatus according to claim 7, wherein the tree relationship comprises an interactive tree relationship and a main-thread tree relationship;
the processing unit is configured to:
traverse a root node and a leaf node in the tree field, draw the interactive tree relationship in the interactive audio-video directory according to interaction rule information of the interactive audio-video issued by a user, and determine the main-thread tree relationship from the interactive tree relationship; and
edit the audio-video clip corresponding to each of nodes and an association relationship between each of the nodes in the interactive tree relationship according to the interaction rule information and the audio-video clip in the video list, and edit a corresponding relationship between each of the nodes and the audio-video clip in the main-thread tree relationship;
wherein the association relationship comprises an interactive description and a plurality of options.

10. The apparatus according to claim 9, wherein the processing unit is further configured to:
obtain node modification information issued by the user after editing the tree relationship according to the video list;
create a new child node and modify the association relationship of the new child node if the node modification information is a newly added node;
delete a deletion node according to an identification of the deletion node if the node modification information is the deletion node; and
modify the association relationship of a modification node according to the identification of the modification node if the node modification information is the modification node.

11. The apparatus according to claim 9, wherein the processing unit is further configured to:
obtain an audio-video clip to be deleted issued by the user after editing the tree relationship according to the video list; and
determine whether the audio-video clip to be deleted is associated with the nodes of the tree relationship, and if not, delete the audio-video clip to be deleted, otherwise do not delete.

12. The apparatus according to any one of claims 7 to 11, wherein the processing unit is configured to:
upload the audio-video clip in the video list and determine a URL of each of audio-video clips;
update the video list in the interactive audio-video directory according to the URL of each of the audio-video clips; and
upload the interactive audio-video directory that is updated and determine the URL of the interactive audio-video directory.

13. A computing device, comprising:
a memory, configured to store a program instruction; and
a processor, configured to call the program instruction stored in the memory and perform the method according to any one of claims 1 to 6 in accordance with the program that is obtained.

14. A computer readable non-volatile storage medium, comprising a computer readable instruction, and the computer readable instruction, when read and executed by a computer, causes the computer to perform the method according to any one of claims 1 to 6.
